# EUROPÄISCHE PATENTSCHRIFT

(11) **EP 1 291 207 B1**
(45) Veröffentlichungstag und Bekanntmachung des Hinweises auf die Patenterteilung: **28.12.2005**
(21) Anmeldenummer: 02017096.5
(22) Anmeldetag: 30.07.2002
(51) Int. Cl.: B60H 1/14, F24J 3/00

(54) **Heizvorrichtung, insbesondere für Kraftfahrzeuge**
Heating device, especially for motor vehicles
Dispositif de chauffage, notamment pour véhicules

(30) Priorität: 06.09.2001 DE 10144845
(43) Veröffentlichungstag der Anmeldung: 12.03.2003
(73) Patentinhaber: Behr GmbH & Co. KG, 70469 Stuttgart (DE)
(72) Erfinder: Augenstein, Claus, Dipl.-Ing., 70839 Gerlingen (DE); Gramlich, Armin, 71665 Vaihingen (DE); Maus, Ralf, Dipl.-Ing, 70825 Korntal-Münchingen (DE); Kamsiz, Özgür, 75438 Knittlingen (DE); Lindauer, Kuno, 75417 Mühlacker (DE)
(74) Vertreter: Grauel, Andreas

(56) Entgegenhaltungen:
- EP-A- 0 816 147
- DE-A- 19 827 097
- US-A- 5 887 551

## Beschreibung

Die Erfindung bezieht sich auf eine Heizvorrichtung, insbesondere für Kraftfahrzeuge nach dem Oberbegriff des Patentanspruches 1. Eine derartige Heizvorrichtung wurde durch die DE-A 198 27 097 oder US 5 887 551 der Anmelderin bekannt.

Diese bekannte Heizvorrichtung ist eine Zusatzheizung für Kraftfahrzeuge mit verbrauchsoptimierten Motoren, bei denen also relativ wenig Abwärme des Motors zu Heizzwecken zur Verfügung steht. Bei der bekannten Bauart wird die Heizwärme über Flüssigkeitsreibung erzeugt und an das Kühlmittel des Motors abgeführt. Dabei wird ein Rotor, der in einem Arbeitsraum der Heizvorrichtung umläuft, von der Brennkraftmaschine des Kraftfahrzeuges angetrieben. Der Rotor bildet mit einer gehäusefesten Wand der Heizvorrichtung einen Arbeitsspalt, der mit viskoser Flüssigkeit gefüllt wird. Durch die Scherreibung der viskosen Flüssigkeit im Arbeitsspalt wird Wärme erzeugt, die vom übertragenen Drehmoment und der Drehzahl abhängig ist. Um die Heizleistung auf ein bestimmtes Maß zu begrenzen, ist bei der bekannten Vorrichtung vorgesehen, daß der Rotor axial beweglich auf der Antriebswelle angeordnet ist, so daß der Arbeitsspalt vergrößert und damit die Heizleistung abgeregelt werden kann. Die axial bewegliche Anordnung des Rotors auf der Antriebswelle, die ein entsprechendes Linearlager erfordert, bedeutet einen konstruktiven Aufwand, der die Herstellkosten einer solchen in Großserien für Kraftfahrzeuge hergestellten Heizeinrichtung erhöht.

Es ist daher Aufgabe der Erfindung, eine Heizvorrichtung der eingangs genannten Art dahingehend zu verbessern, daß eine Abregelung der Heizleistung mit einfachen Mitteln möglich ist.

Die Lösung dieser Aufgabe erfolgt erfindungsgemäß durch die Merkmale der Patentansprüche 1 und 2, d. h. durch die Anordnung eines Abregelventiles im Rücklauf des Kreislaufes der viskosen Flüssigkeit in der Heizvorrichtung. Durch diese relativ einfache konstruktive Maßnahme wird der Druck der viskosen Flüssigkeit in der Arbeitskammer und damit auch in dem Arbeitsspalt abgeregelt, was gleichzeitig zu einer Abregelung der Heizleistung führt. Ein verschleißbehaftetes Linearlager entfällt, da der Rotor in axialer Richtung fest auf der Antriebswelle angeordnet ist. Eine Überhitzung, die auch zur Zerstörung der viskosen Flüssigkeit führen könnte, wird vermieden. Darüber hinaus wird auch Antriebsleistung des Verbrennungsmotors des Kraftfahrzeuges eingespart, weil das Antriebsmoment für den Rotor bei Druckminderung reduziert wird. Diese Maßnahme beruht auf der Erkenntnis, daß der statische Druck der viskosen Flüssigkeit in Arbeitsraum und damit auch im Arbeitsspalt maßgebend für das übertragbare Drehmoment und damit auch für die Heizleistung ist.

In einer Ausgestaltung der Erfindung kann das Abregelventil auch als elektrisch angesteuertes Proportional- oder Taktventil ausgebildet sein. Diese Bauweise beinhaltet den Vorteil, daß unter Verwendung von Daten und Parametern der Motorsteuerung von außen auf die Regelung der Heizleistung der Heizvorrichtung eingegriffen werden kann. Beispielsweise kann die Heizleistung in Abhängigkeit von der Kühlmitteltemperatur oder von der Motordrehzahl abgeregelt werden. Das Taktventil kann relativ einfach im Vorratsraum und in der Zwischenscheibe der Heizvorrichtung angeordnet werden.

In einer zweiten Ausgestaltung der Erfindung kann das Abregelventil entweder zusätzlich, d. h. als Bypassventil zum Rücklaufventil vorgesehen oder als ein integriertes Ventil mit zwei Funktionen für Rücklauf und Abregelung ausgebildet sein.

In vorteilhafter Ausgestaltung der Erfindung kann dieses Abregelventil auf verschiedene Art und Weise ausgebildet sein, z. B. als hydraulisches Überdruckventil mit einer bestimmten Durchlaufcharakteristik. Diese Bauweise ist besonders preisgünstig und robust in der Funktion. In weiterer Ausgestaltung der Erfindung kann dieses Abregelventil auch als bimetallbetätigtes Ventil ausgebildet sein, welches die Temperatur des viskosen Mediums in der Heizvorrichtung fühlt und in Abhängigkeit von einer maximalen Temperatur das Abregelventil öffnet. Ein derartig temperaturabhängiges Ventil bewahrt die Heizvorrichtung auch vor Überhitzung und Zerstörung der viskosen Flüssigkeit.

Schließlich ist in weiterer Ausgestaltung der Erfindung auch ein Verfahren für die Abregelung der Heizleistung vorteilhaft. Nach diesem Verfahren wird der Druck der viskosen Flüssigkeit im Arbeitsraum bzw. im Arbeitsspalt geregelt, und zwar in der Weise, daß bei Überschreiten eines maximalen Schwellwertes eine Druckentlastung erfolgt, die gleichzeitig zur Abregelung der Heizleistung führt.

Ausführungsbeispiele der Erfindung sind in der Zeichnung dargestellt und werden im Folgenden näher beschrieben. Es zeigen
- Fig. 1: einen Axialschnitt durch eine Heizvorrichtung mit hydraulischem Überdruckventil,
- Fig. 2: einen Axialschnitt durch die Heizvorrichtung mit elektrisch angesteuertem Abregelventil,
- Fig. 3: eine Ansicht auf die Zwischenscheibe mit einem bimetallgesteuerten Ventil,
- Fig. 3a: das Bimetall-Ventil als vergrößerte Einzelheit und
- Fig. 4: ein hydraulisches Kreislaufschema der Heizvorrichtung.

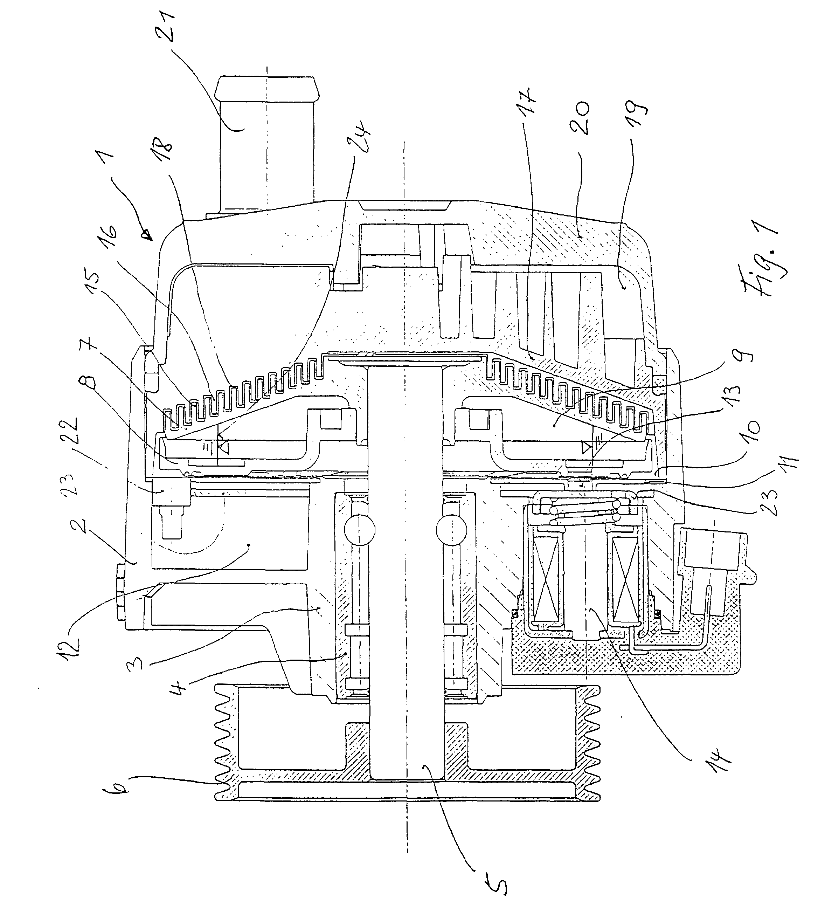

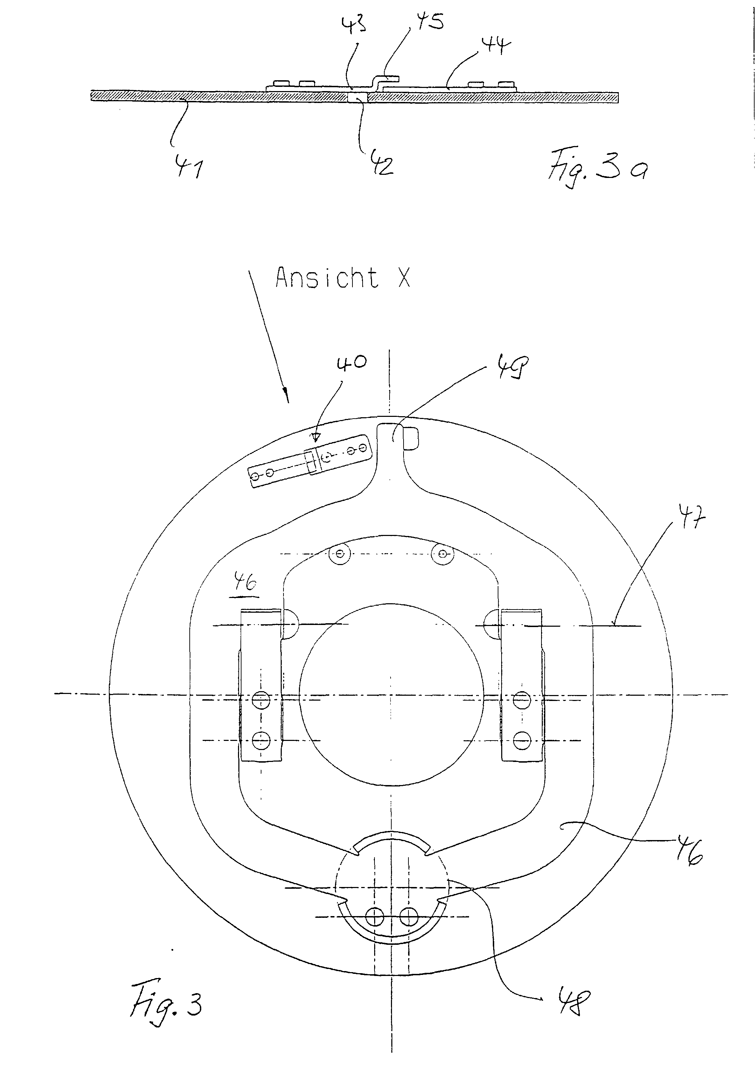

**Fig. 1** zeigt eine Heizvorrichtung 1 für Kraftfahrzeuge, d. h. eine sogenannte Zusatzheizung für verbrauchsoptimierte Motoren. Die Heizvorrichtung 1 besteht aus einem ortsfesten Gehäuse 2, welches im Motorraum eines nichtdargestellten Kraftfahrzeuges befestigt ist. In diesem Gehäuse 2 ist über eine Nabe 3 und ein Wälzlager 4 eine Antriebswelle 5 gelagert, die außerhalb des Gehäuses 2 eine Riemenscheibe 6 und innerhalb des Gehäuses einen drehfest mit der Antriebswelle 5 verbundenen Rotor 7 trägt. Dem Rotor 7 ist, ebenfalls drehfest auf der Antriebswelle, eine sogenannte Schleuderscheibe 8 zugeordnet. Rotor 7 und Schleuderscheibe 8, die beide auf der Antriebswelle axial fixiert sind und zwischen sich einen Zwischenraum 9 bilden, laufen gemeinsam, d. h. synchron in einem Arbeitsraum 10 um. Letzterer ist über eine Zwischenwand 11 von einem Vorratsraum 12 abgeteilt, wobei in der Zwischenwand 11 eine Zulaufbohrung 13 und eine nicht dargestellte Rücklaufbohrung angeordnet sind. Die Zulaufbohrung 13 wird über ein elektromagnetisches Ventil 14 angesteuert, und zwar mittels eines Kipphebels 23, der gleichzeitig die nicht dargestellte Rücklaufbohrung steuert und unten - bei der Beschreibung von Fig. 3 - näher erläutert wird. Der Rotor 7 ist auf seiner dem Zwischenraum 9 abgewandten Seite mit Ringrippen 15 versehen, die in korrespondierende Ringrippen 16 einer gehäusefesten Wand 17 eingreifen und mit diesen einen mäanderförmig ausgebildeten Arbeitsspalt 18 bilden. Der Arbeitsspalt 18, der Zwischenraum 9, der Arbeitsraum 10 und der Vorratsraum 12 stehen in Fluidverbindung und sind mit einer viskosen Flüssigkeit, z. B. einem handelsüblichen Silikonöl, gefüllt. Auf der dem Arbeitsspalt 18 abgewandten Seite der Wand 17 befindet sich eine Kühlkammer 19, die durch einen Deckel 20 nach außen abgeschlossen wird und über einen Stutzen 21 mit dem nicht dargestellten Kühlmittelkreislauf der Brennkraftmaschine und somit mit dem Heizkörper einer nicht dargestellten Heizungsanlage des Kraftfahrzeuges in Verbindung steht. Ein weiterer Kühlmittelstutzen ist in der Zeichnung nicht erkennbar, er liegt direkt hinter dem Stutzen 21. Insofern hat die Kühlkammer 19 einen Kühlmittelzufluß und -abfluß, um die im Arbeitsspalt 18 entstehende Wärme abzuführen.

Erfindungsgemäß ist nun vorgesehen, daß in der Zwischenwand 11 ein Abregelventil 22 angeordnet ist, welches einen in der Zeichnung nicht dargestellten Durchflußquerschnitt in Abhängigkeit vom Druckgefälle zwischen Arbeitskammer 10 und Vorratskammer 12 freigibt bzw. wieder verschließt. Dieses Hydraulikventil 22 ist handelsüblich und wird hinsichtlich seines Öffnungsdruckes und seiner Durchflußcharakteristik an die gewünschten Druck- und Strömungsverhältnisse in der Heizvorrichtung angepaßt. Dieses Abregelventil 22 öffnet und schließt somit unabhängig von dem bereits erwähnten Elektromagnetventil 14, welches die Zulaufbohrung 13 steuert.

Die Funktion dieser Heizvorrichtung 1 ist die folgende:

Die Antriebswelle 5 wird über die Riemenscheibe 6 vom nicht dargestellten Verbrennungsmotor des Kraftfahrzeuges angetrieben und treibt ihrerseits den Rotor 7 sowie die Schleuderscheibe 8 an. Bei geöffneter Zulaufbohrung 13 strömt Öl aus dem Vorratsraum 12 in den Arbeitsraum 10 und in den Zwischenraum 9. Durch die Rotation von Rotor 7 und Schleuderscheibe 8 bildet sich in dem Zwischenraum ein Ölring aus, der nach innen durch einen Ölspiegel 24 begrenzt wird. Aufgrund der Zentrifugalkräfte wirkt in diesem Ölring ein Druck, der das Öl in den Arbeitsspalt 18 drückt und diesen mit Öl füllt. Aufgrund der hierbei auftretenden Scherreibung entsteht Wärme, die über die Zwischenwand 17 an das Kühlmittel im Kühlraum 19 abgeführt wird. Das erwärmte Kühlmittel gelangt in den Kühlmittelkreislauf der Brennkraftmaschine und damit in einen nicht dargestellten Heizkörper, über den der Fahrgastraum erwärmt werden kann. Steigt die Heizleistung, beispielsweise aufgrund erhöhter Motordrehzahl, über einen bestimmten Wert an, öffnet das Überdruckventil 22, und der Öldruck im Arbeitsraum und damit auch im Arbeitsspalt 18 läßt nach, damit reduziert sich auch die Heizleistung. Somit kann die Wärmeerzeugung dieser Heizvorrichtung bei Erreichen eines bestimmten Druckes im Arbeitsraum 10 abgeregelt werden.

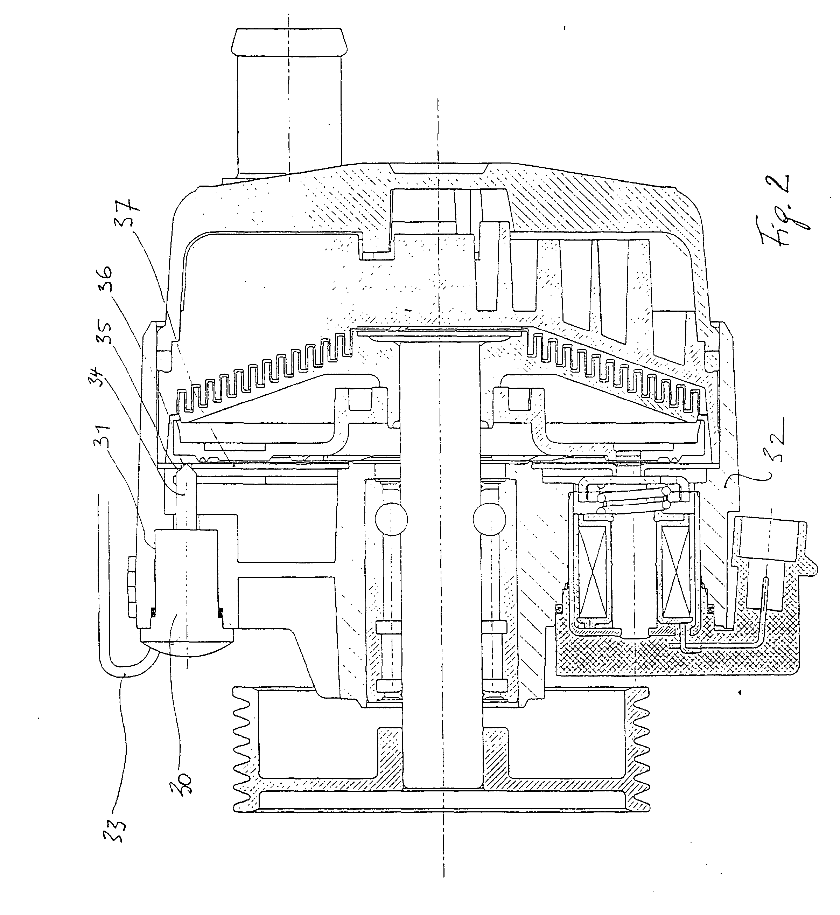

**Fig. 2** zeigt im Wesentlichen das selbe Ausführungsbeispiel, wie es in Fig. 1 dargestellt ist, allerdings mit dem Unterschied, daß ein anderes Abregelventil vorgesehen ist, nämlich ein elektrisch angesteuertes Proportional- oder Taktventil 30. Dieses Ventil 30 ist in einer von außen zugänglichen Bohrung 31 des Gehäuses 32 eingesetzt und abgedichtet und wird über ein elektrisches Kabel 33 angesteuert. Das Ventil 30 weist einen Ventilschaft 34 mit einem kegelförmigen Schließteil 35 auf, welches eine Ventilöffnung 36 in der Zwischenwand 37 kontrolliert. Dieses Ventil 30 kann auf bekannte Weise taktförmig betrieben werden, indem es in gesteuerten Intervallen auf- und zumacht, oder es arbeitet als Proportionalventil und kann dann auch Zwischenstellungen einnehmen. Dieses Taktventil 30 kann einerseits als Bypassventil, d. h. zusätzlich zu der nicht dargestellten Rücklaufbohrung, betrieben werden; es kann andererseits auch anstelle der Rücklaufbohrung verwendet werden, indem es beide Funktionen, nämlich die der Rücklaufsteuerung und die der Abregelung übernimmt.

**Fig. 3** zeigt eine Ansicht auf die Zwischenscheibe zwischen Arbeitsraum und Vorratsraum der Heizeinrichtung mit einer weiteren Ausführungsform für das Abregelventil, nämlich in Form eines bimetallgesteurten Zungenventiles 40. Dieses Zungenventil 40 ist als Einzelheit in vergrößerter Darstellung in **Fig. 3a** dargestellt. In einer Zwischenscheibe 41, die sich - entsprechend den oben beschriebenen Ausführungsbeispielen gemäß Fig. 1 und 2 - jeweils zwischen der Arbeitskammer und der Vorratskammer befindet, ist eine Bypassbohrung 42 vorgesehen, die durch einen zungenförmigen, einseitig eingespannten Ventilhebel 43, der aufgrund seiner Federspannung auf der Zwischenwand 41 aufliegt, verschlossen wird. In Verlängerung dieses zungenförmigen Ventilhebels 43 befindet sich ein ebenfalls einseitig eingespanntes Bimetall 44, dessen freies Ende unterhalb eines abgekröpften Absatzes 45 an der Zungenspitze des Zungenventils 43 angeordnet ist. Das Bimetall 44 wird sich bei Überschreiten einer bestimmten Temperatur von der Zwischenwand 41 abheben, dann das Zungenventil 43 öffnen und somit die Bypassbohrung 42 freigeben. Dieses Ventil spricht somit auf die Temperatur des viskosen Mediums in der Vorratskammer an.

In dieser Ansicht ist auch ein Ventilkipphebel 46 dargestellt, der um eine Achse 47 schwenkbar ist und von einem Elektromagnetventil 48 angesteuert wird. Der Kipphebel 46 weist eine diametral gegenüber dem Elektromagnetventil 48 liegende Zunge 49 auf, die eine dahinter liegende nicht dargestellte Rücklauföffnung kontrolliert. Insofern werden über diesen Kipphebel 46 sowohl die Zulauf- als auch die Rücklaufbohrung in der Zwischenwand gesteuert. Im übrigen entspricht dieser Kipphebel dem der gattungsbildenden Druckschrift, der DE-A 198 27 097.

Dieser Kipphebel 46 kann jedoch auch - unter Weglassung des Bypassventiles 40 - derart gezielt getaktet werden, daß das Rücklaufventil gleichzeitig als Abregelventil betrieben wird.

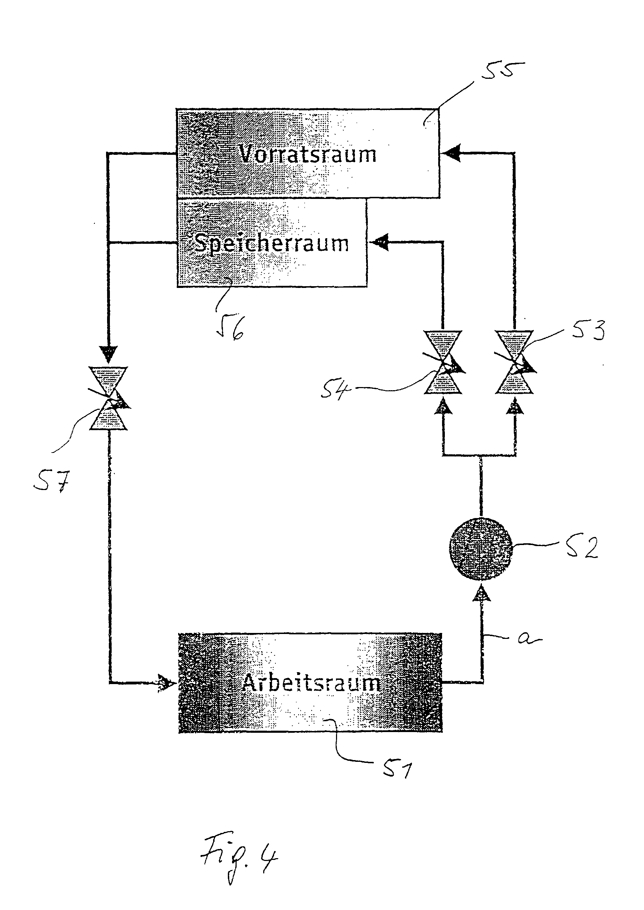

**Fig. 4** zeigt in schematischer Darstellung den Kreislauf 50 des viskosen Mediums innerhalb der Heizvorrichtung, d. h. vom Arbeitsraum zum Vorratsraum und zurück. Die viskose Flüssigkeit möge sich dabei zunächst im Arbeitsraum 51 befinden, welcher in Fig. 1 dem Arbeitsraum 10 und dem Arbeitsspalt 18 entspricht. Der Rücklauf aus dem Arbeitsraum 51 in Richtung Vorratsraum 55 erfolgt in Richtung des Pfeiles a, wobei das notwendige Druckgefälle über einen Staukörper 52 erzeugt wird. Hinter dem Staukörper 52 befindet sich in paralleler Anordnung einerseits die Rücklaufbohrung 53 (regelbar oder nicht regelbar) und andererseits ein Bypassventil 54, welches dem Ventil 22 oder 30 oder 40 entsprechen kann. Über diese beiden Ventile bzw. Bohrungen gelangt die viskose Flüssigkeit in einen Vorratsraum 55 bzw. einen Speicherraum 56, der hier als zusätzlicher Raum dargestellt ist - er kann aber auch Teil des Vorratsraumes 55 sein. Der Vorratsraum 55 entspricht dem Vorratsraum 12 des Ausführungsbeispieles gemäß Fig. 1. Vom Vorrats- und Speicherraum 55 und 56 strömt das viskose Medium über die Zulaufbohrung bzw. über das Zulaufventil 57 wieder zurück in den Arbeitsraum 51, wobei das Zulaufventil 57 dem Ventil 14 und der Zulaufbohrung 13 in Fig. 1 entspricht.

Obwohl in diesem Schema zwei parallel zueinander angeordnete Ventile 53 und 54 dargestellt sind, ist es auch möglich, beide Ventile zu einem Ventil mit zwei Funktionen zusammenzufassen - dies könnte - wie bereits oben erwähnt - ein Taktventil sein.

### Bezugszeichenliste

- 1: Heizvorrichtung
- 2: Gehäuse
- 3: Nabe
- 4: Welzlager
- 5: Antriebswelle
- 6: Riemenscheibe
- 7: Rotor
- 8: Schleuderscheibe
- 9: Zwischenraum
- 10: Arbeitsraum
- 11: Zwischenwand
- 12: Vorratsraum
- 13: Zulaufbohrung
- 14: Elektromagnetventil
- 15: Ringnut, rotorseitig
- 16: Ringrippen, gehäuseseitig
- 17: Gehäusefeste Wand
- 18: Arbeitsspalt
- 19: Kühlkammer
- 20: Gehäusedeckel
- 21: Kühlmittelstutzen
- 22: Überdruckventil
- 23: Kipphebel
- 24: Spiegel von Oelring
- 30: Taktventil
- 31: Gehäusebohrung
- 32: Gehäuse
- 33: Elektrisches Kabel
- 34: Ventilschaft
- 35: Schließglied
- 36: Ventilöffnung
- 37: Zwischenwand

- 40: Bimetall-Ventil
- 41: Zwischenscheibe
- 42: Bypassöffnung
- 43: Ventilhebel
- 44: Bimetall
- 45: Abkröpfung
- 46: Ventilkipphebel
- 47: Schwenkachse
- 48: Elektromagnetventil
- 49: Kipphebelzunge

- 50: Hydraulikschema
- 51: Arbeitsraum
- 52: Staukörper
- 53: Rücklaufbohrung
- 54: Bypassventil
- 55: Vorratsraum
- 56: Speicherraum
- 57: Zulaufventil

## Patentansprüche

1. Heizvorrichtung, insbesondere für Kraftfahrzeuge, zur Erzeugung von Reibungswärme durch Flüssigkeitsreibung mit einem ortsfest angeordneten Gehäuse (2), welches einen Arbeitsraum (10), einen durch eine Zwischenwand (11) von dem Arbeitsraum (10) abgeteilten Vorratsraum (12) aufweist, der über mindestens eine Zulauf- und eine Rücklauföffnung zur Ermöglichung eines Kreislaufes von viskoser Flüssigkeit mit dem Arbeitsraum in Fluidverbindung steht, wobei im Arbeitsraum ein über einen Motor angetriebener Rotor (7) umläuft, der mit einer gehäusefesten Wand (17) einen Arbeitsspalt (18) bildet und welchem eine ebenfalls im Arbeitsraum (10) angeordnete Schleuderscheibe (8) zugeordnet ist, und wobei das Gehäuse (2) ferner eine von einem Kühlmittel durchströmte Kühlkammer (19) aufweist, die an die gehäusefeste Wand (17) anschließt, und im Rücklauf des Flüssigkeits-kreistaufes ein Abregelventil (22, 30, 40) angeordnet ist, **dadurch gekennzeichnet, daß** das Abregelventil als elektrisch angesteuertes Proportional- oder Taktventil (30) ausgebildet ist.

2. Heizvorrichtung, insbesondere für Kraftfahrzeuge, zur Erzeugung von Reibungswärme durch Flüssigkeitsreibung mit einem ortsfest angeordneten Gehäuse (2), welches einen Arbeitsraum (10), einen durch eine Zwischenwand (11) von dem Arbeitsraum (10) abgeteilten Vorratsraum (12) aufweist, der über mindestens eine Zulauf- und eine Rücklauföffnung zur Ermöglichung eines Kreislaufes von viskoser Flüssigkeit mit dem Arbeitsraum in Fluidverbindung steht, wobei im Arbeitsraum ein über einen Motor angetriebener Rotor (7) umläuft, der mit einer gehäusefesten Wand (17) einen Arbeitsspalt (18) bildet und welchem eine ebenfalls im Arbeitsraum (10) angeordnete Schleuderscheibe (8) zugeordnet ist, und wobei das Gehäuse (2) ferner eine von einem Kühlmittel durchströmte Kühlkammer (19) aufweist, die an die gehäusefeste Wand (17) anschließt, und im Rücklauf des Flüssigkeitskreislaufes ein Abregelventil (22, 30, 40) angeordnet ist, **dadurch gekennzeichnet, daß** das Abregelventil als Bypassventil (54) zur Rücklaufbohrung (53) ausgebildet ist

3. Heizvorrichtung nach Anspruch 2, **dadurch gekennzeichnet, daß** das Abregelventil in der Zwischenwand (11) angeordnet und als hydraulisches Überdruckventil (22) ausgebildet ist.

4. Heizvorrichtung nach Anspruch 2, **dadurch gekennzeichnet, daß** das Abregelventil als elektrisch angesteuertes Proportional- oder Taktventil (30) ausgebildet ist.

5. Heizvorrichtung nach Anspruch 2, **dadurch gekennzeichnet, daß** das Abregelventil als bimetallbetätigtes Ventil (40) ausgebildet ist.

6. Heizvorrichtung nach Anspruch 5, **dadurch gekennzeichnet, daß** das bimetallbetätigte Ventil (40) als Zungenventil (43) ausgebildet ist, welches an der Zwischenwand (41) befestigt ist.

7. Heizvorrichtung nach einem der Ansprüche 1 **dadurch gekennzeichnet, daß** Abregelventil und Rücklaufventil als ein integriertes Ventil ausgebildet sind.

8. Verfahren zur Regelung der Heizleistung einer Heizvorrichtung nach einem der vorhergehenden Ansprüche, **dadurch gekennzeichnet, daß** der statische Druck der viskosen Flüssigkeit im Arbeitsraum in der Weise geregelt wird, daß er einen vorgegebenen Wert Pₘₐₓ nicht überschreitet.

9. Verfahren nach dem Ansprüche 8, **dadurch gekennzeichnet, daß** der Druck im Arbeitsraum durch Öffnen eines Überdruckventils abgeregelt wird.

10. Verfahren nach Anspruch 9, **dadurch gekennzeichnet, daß** der Druck im Arbeitsraum durch taktweises Öffnen und Schließen einer Rücklauföffnung in Abhängigkeit von Kühlmitteltemperatur und/oder Motordrehzahl abgeregelt wird.

## Claims

1. Heating device, particularly for vehicles, for producing frictional heat through friction of a liquid with a fixed housing (2) which has a working space (10) and a supply chamber (12) that is divided off from the working space (10) by a partition (11) the said supply chamber (12) being in fluid connection with the working space by means of a supply and a return-movement opening enabling circulation of viscous liquid, whereby a rotor (7) driven by a motor revolves in the working space, the said rotor (7) forming, with a surface (17) that is a fixed part of the housing, a working gap (18) and having a machine disc, likewise disposed in the working space, associated with it, and whereby the housing (2) further has a cooling chamber (19), which is flowed through by a coolant, adjoining the surface (17) that is solid with the housing, and a regulating valve (22, 30, 40) is disposed in the return channel of the liquid circulation,
**characterized in that**
the regulating valve is developed as an electrically controlled proportional action- or cycle-valve (30).

2. Heating device, particularly for vehicles, for producing frictional heat through friction of a liquid with a fixed housing (2) which has a working space (10) and a supply chamber (12) that is divided off from the working space (10) by a partition (11) the said supply chamber (12) being in fluid connection with the working space by means of a supply and a return-movement opening enabling circulation of viscous liquid, whereby a rotor (7) driven by a motor revolves in the working space, the said rotor (7) forming, with a surface (17) that is a fixed part of the housing, a working gap (18) and having a machine disc, likewise disposed in the working space, associated with it, and whereby the housing (2) further has a cooling chamber (19), which is flowed through by a coolant, adjoining the surface (17) that is solid with the housing, and a regulating valve (22, 30, 40) is disposed in the return channel of the liquid circulation,
**characterized in that**
the regulating valve is in the form of a bypass valve (54) going to the return boring (53).

3. Heating device in accordance with claim 2, **characterized in that** the regulating valve is disposed in the partition (11) and is in the form of a hydraulic excess-pressure valve (22).

4. Heating device in accordance with claim 2, **characterized in that** the regulating valve is an electrically controlled proportional-action valve or a cycle valve (30).

5. Heating device in accordance with claim 2, **characterized in that** the regulating valve is developed as a bimetal valve (40).

6. Heat device in accordance with claim 5, **characterized in that** the bimetal valve (40) is developed as a tongue valve (43) that is attached to the partition (41).

7. Heating device in accordance with claim 1, **characterized in that** the regulating valve and the bypass valve are developed as an integrated valve.

8. Process, for regulating the heating capacity of a heating device, in accordance with one of the preceding claims, **characterized in that** the static pressure of the viscous fluid in the working space is regulated such that it does not exceed a set value Pₘₐₓ.

9. Process in accordance with claim 8, **characterized in that** opening an excess-pressure valve regulates the pressure in the working space.

10. Process in accordance with claim 9, **characterized in that** the pressure in the working space is regulated, on the basis of the temperature of the coolant and/or the rotational speed of the motor, by cyclic opening and closure of a return-movement opening.

## Revendications

1. Dispositif de chauffage, en particulier pour des véhicules, pour la génération de chaleur de frottement par frottement de liquide avec un boîtier (2) disposé de façon fixe, qui présente un espace de travail (10), un espace de réserve (12) séparé de l'espace de travail (10) par une paroi intermédiaire (11), lequel espace est en liaison fluidique avec l'espace de travail au moyen d'au moins un orifice aller et un orifice retour pour permettre un circuit de liquide visqueux, un rotor (7) entraîné par un moteur tournant dans l'espace de travail, lequel rotor forme avec une paroi (17) solidaire du boîtier une fente de travail (18) et auquel est attribué un disque de projection (8) disposé également dans l'espace de travail (10), et le boîtier (2) présentant également une chambre de refroidissement (19) traversée par un agent réfrigérant, qui se raccorde à la paroi (17) solidaire du boîtier et une vanne de réglage (22, 30, 40) étant disposée dans le trajet retour du circuit de liquide, **caractérisé en ce que** la vanne de réglage est conçue comme une vanne proportionnelle ou une vanne de synchronisation (30) à commande électrique.

2. Dispositif de chauffage, en particulier pour des véhicules, pour générer de la chaleur de frottement par frottement de liquide avec un boîtier (2) disposé de façon fixe, qui présente un espace de travail (10), un espace de réserve (12) séparé de l'espace de travail (10) par une paroi intermédiaire (11), lequel espace est en liaison fluidique avec l'espace de travail au moyen d'au moins un orifice aller et un orifice retour pour permettre un circuit de liquide visqueux, un rotor (7) entraîné par un moteur tournant dans l'espace de travail, lequel rotor forme avec une paroi (17) solidaire du boîtier une fente de travail (18) et auquel est attribué un disque de projection (8) disposé également dans l'espace de travail (10), et le boîtier (2) présentant également une chambre de refroidissement (19) traversée par un agent réfrigérant, qui se raccorde à la paroi (17) solidaire du boîtier, et une vanne de réglage (22, 30, 40) étant disposée dans le trajet retour du circuit de liquide, **caractérisé en ce que** la vanne de réglage est conçue comme une vanne de dérivation (54) pour l'alésage de retour (53).

3. Dispositif de chauffage selon la revendication 2, **caractérisé en ce que** la vanne de réglage est disposée dans la paroi intermédiaire (11) et est conçue comme une vanne de suppression (22) hydraulique.

4. Dispositif de chauffage selon la revendication 2, **caractérisé en ce que** la vanne de réglage est conçue comme une vanne proportionnelle ou une vanne de synchronisation (30) à commande électrique.

5. Dispositif de chauffage selon la revendication 2, **caractérisé en ce que** la vanne de réglage est conçue comme une vanne (40) commandée par bilame.

6. Dispositif de chauffage selon la revendication 5, **caractérisé en ce que** la soupape (40) commandée par bilame est conçue comme une soupape à languette (43), qui est fixée sur la paroi intermédiaire (41).

7. Dispositif de chauffage selon la revendication 1, **caractérisé en ce que** la vanne de réglage et la vanne de retour sont conçues comme une vanne intégrée.

8. Procédé pour le réglage de la puissance de chauffage d'un dispositif de chauffage selon l'une quelconque des revendications précédentes, **caractérisé en ce que** la pression statique du liquide visqueux dans l'espace de travail est réglée de façon qu'elle ne dépasse pas une valeur prédéfinie Pmax.

9. Procédé selon la revendication 8, **caractérisé en ce que** la pression dans l'espace de travail est réglée par l'ouverture d'une vanne de surpression.

10. Procédé selon la revendication 9, **caractérisé en ce que** la pression dans l'espace de travail est réglée par l'ouverture et la fermeture cycliques d'un orifice de retour en fonction de la température du réfrigérant et/ou du régime moteur.
